# EUROPEAN PATENT APPLICATION

(11) **EP 4 037 151 A1**
(43) Date of publication of application: **03.08.2022**
(21) Application number: 22151331.0
(22) Date of filing: 13.01.2022
(51) Int. Cl.: H02K 1/20, H02K 9/19

(54) **STATOR PUNCHING PIECE, STATOR CORE AND MOTOR**

(30) Priority: 18.01.2021 CN 202110061453
(71) Applicant: Jing-Jin Electric Technologies Co., Ltd., Beijing (CN)
(72) Inventor: HAO, Ziqiang, BEIJING (CN); GAO, Meiling, BEIJING (CN); YU, Ping, BEIJING (CN)
(74) Representative: Gamba, Alessandro

(57) **Abstract**

The present disclosure discloses a stator punching piece, stator core and motor. The stator punching piece is formed by die stamping. An outer circumference of the stator punching piece is provided with a continuous concave-convex structure extending in an axial direction of the stator punching piece for a cooling medium to flow therethrough, so as to increase an heat dissipation area of an outer circumference of a stator core composed of the stator punching pieces and improve a flow state of the cooling medium on the outer circumferential surface of the stator core, thereby increasing a rated power and rated torque of a motor. Since the stator punching piece is formed by die stamping, changing the shape of the outer edge of the stator punching piece has no effect on the manufacturing cost of the motor. Without increasing the cost, the rated power and rated torque of the motor can be increased by 5-10%.

## Description

### TECHNICAL FIELD

The present disclosure belongs to the technical field of motor manufacturing, and particularly relates to a stator punching piece, stator core and motor.

### BACKGROUND

In recent years, with the rapid development of the new energy automobile industry, the requirements for a drive motor or generator, the core part of new energy automobiles, have become higher. With the miniaturization and light weight of motors, the requirement for their rated torque density and rated power density does not reduce but increases year by year, which has increasingly highlighted the importance of the rated torque and rated power for the motor of new energy vehicles.

Studies have shown that the rated torque and rated power of the motor directly affect the maximum speed, load capacity and long-term climbing ability of new energy vehicles. As major motor manufacturers become more aware of the rated torque and rated power, more attention and requirements have been put on them. Moreover, as more commercial vehicles, especially heavy commercial vehicles, have joined the list of new energy vehicles in recent years, pure electric drives or hybrid drives for them have been developed. Due to their high load requirements, the requirements for the rated power and rated torque of the motor have been their core requirement.

The rated power and rated torque of the motor are completely determined by the motor cooling design scheme. At present, the motor manufacturers generally increase the rated power and rated torque of the motor through the cooling design scheme such as oil cooling design, water cooling design or mixed cooling design and cooling medium circulation path design.

That is to say, the conventional way to increase the rated power and rated torque of the motor is the design of the cooling medium and the design of the cooling medium circulation path. However, with the improvement of the theoretical analysis of the above cooling design and development stage, the room for increasing the rated power and rated torque of the motor is close to the limit.

### SUMMARY

In view of the above problems, the present disclosure improves the structure of the stator core, and discloses a stator punching piece, stator core and motor that can improve the cooling efficiency of the motor, so as to overcome the above problems or at least partially solve the above problems.

In order to achieve the above object, the present disclosure adopts the following technical solutions:

In one aspect of the present disclosure, there is provided a stator punching piece, formed by die stamping, wherein an outer circumference of the stator punching piece is provided with a continuous concave-convex structure extending in an axial direction of the stator punching piece for a cooling medium to flow therethrough, so as to increase an heat dissipation area of an outer circumference of a stator core composed of the stator punching pieces and improve a flow state of the cooling medium on the outer circumferential surface of the stator core, thereby increasing a rated power and rated torque of a motor.

Optionally, the concave-convex structure is a wave-shaped structure.

Optionally, the wave-shaped structure is a sine-shaped structure, a continuous rectangular structure, or a sine-rectangular hybrid structure.

Optionally, a vertical distance between a lowest point of the concave and a highest point of the convex is 0.1-5 mm.

Optionally, a vertical distance between a lowest point of the concave and a highest point of the convex is 2-4 mm.

Optionally, a number of lugs are provided on the outer circumference of the stator punching piece, and the lugs are provided or not provided with the concave-convex structure.

Another aspect of the present disclosure provides a stator core, which is formed by laminating a number of the stator punching pieces described in any one of the above.

Optionally, the concave-convex structures of the stator punching pieces have a same structure, and their positions when laminated are same or different.

Another aspect of the present disclosure provides a motor, the motor adopts the stator core according to claim 7 or 8, and the stator core can increase the rated power and rated torque of the motor by 5-10%.

Optionally, the cooling medium of the motor is oil or a mixture of oil and water.

The advantages and beneficial effects of the present disclosure are as follows.

Since the above stator punching piece is formed by die stamping, changing the shape of the outer edge of the stator punching piece has no effect on the manufacturing cost of the motor. Without increasing the cost, the rated power and rated torque of the motor are increased by 5-10%, thereby obtaining unexpected increase in the rated power and rated torque of the motor.

### BRIEF DESCRIPTION OF DRAWINGS

By reading the detailed description of the preferred embodiments below, various other advantages and benefits will become clear to a person of ordinary skill in the art. The drawings are only used for the purpose of illustrating the preferred embodiments, and should not be considered as a limitation to the present disclosure. Moreover, throughout the drawings, the same reference numerals are used to denote the same components. In the drawings:
FIG. 1 is a schematic diagram of a partial structure of a stator punching piece in the prior art;
FIG. 2 is a schematic diagram of a partial structure of a stator punching piece according to an embodiment of the present disclosure;
FIG. 3 is a schematic diagram of a partial enlarged structure of FIG. 2; and
FIG. 4 is a schematic diagram of a peak-to-peak value of the sine wave, i.e., a vertical distance between the highest point of the positive wave peak and the lowest point of the negative wave peak in an embodiment of the present disclosure.

### DETAILED DESCRIPTION

In order to make the objectives, technical solutions, and advantages of the present disclosure clearer, the technical solutions of the present disclosure will be described clearly and completely in conjunction with specific embodiments of the present disclosure and corresponding drawings. Obviously, the embodiments described are only part of the embodiments of the present disclosure, rather than all of the embodiments. Based on the embodiments in the present disclosure, all other embodiments obtained by a person of ordinary skill in the art without paying creative work shall fall within the protection scope of the present disclosure.

It should be understood that the terms "include/comprise", "consisting of' or any other variants are intended to cover non-exclusive inclusion, so that a product, equipment, process or method including a series of elements not only comprises those elements, but, if necessary, may also include other elements not explicitly listed, or elements inherent to the product, equipment, process, or method. In the case that there is no more limitation, the elements defined by the phrases "include/comprise" and "consisting of..." do not exclude that the product, equipment, process or method including the named elements further includes additional named elements.

It should also be understood that orientation or positional relationship indicated by the terms "upper", "lower", "front", "rear", "left", "right", "top", "bottom", "inner", "outer", etc. are orientation or positional relationship based on the drawings, which are merely for convenience of describing the present disclosure and simplifying the description, rather than indicating or implying that the device or component referred to must have a specific orientation, or must be constructed and operated with a specific orientation, they should not be construed as limiting the present disclosure.

In the present disclosure, unless otherwise expressly defined and limited, the terms "installation", "connected", "connection" , "fixed" and the like should be broadly understood, for example, it may be fixedly connected, or detachably connected, or integrally connected; it may also be mechanically connected, or electrically connected; it may also be directly connected, or indirectly connected through an intermediate element; it may also be the internal communication of two components or the interaction relationship between two components. For a person of ordinary skill in the art, the specific meaning of the above terms in the present disclosure should be understood according to specific circumstances.

The technical solutions according to the embodiments of the present disclosure will be described in detail below with reference to the accompanying drawings.

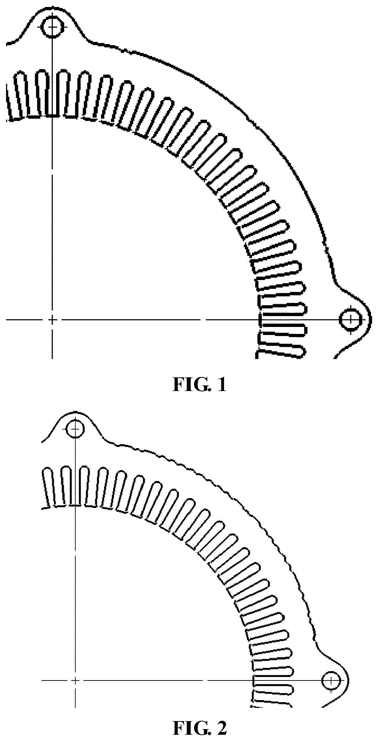

FIG. 1 is a schematic diagram of a partial structure of a stator punching piece in the prior art. The conventional motor stator punching piece is generally formed by die stamping, and its outer circumference is a standard circle or a standard circle with on one or more lugs for installing the stator. The conventional motor stator punching piece do not use the entire area of the outer circumference of the stator punching piece for heat dissipation or cooling.

In view of this, an embodiment of the present disclosure proposes a new technical solution for cooling and heat dissipation of the stator core. Refer to FIG.2, the stator punching piece is also formed by die stamping. Its main technical concept is as follows. An outer circumference of the stator punching piece is provided with a continuous concave-convex structure for a cooling medium to flow therethrough. Especially, the cooling medium flows through the concaves, so that even if the cooling medium is air, the heat dissipation effect of the stator punching piece can be improved.

The specific shape, structure, and quantity of the above concaves and convexes may not be specifically limited. The thickness and outer edge of the stator punching piece can be of any size, which may be specifically adjusted according to the overall design of the motor.

Specifically, the above concave-convex structure extends in the axial direction of the stator punching piece for the cooling medium to flow therethrough, so as to increase an heat dissipation area of an outer circumference of a stator core composed of the stator punching pieces, and at the same time, improve a flow state of the cooling medium on the outer circumferential surface of the stator core. The improved cooling performance can increase the rated power and rated torque of the motor.

Through simulation and experimental verification, the above design can make the rated power and rated torque of the motor increase unexpectedly, and the increase is within the range of 5%-10%.

In a specific embodiment, the concave-convex structure is a wave-shaped structure.

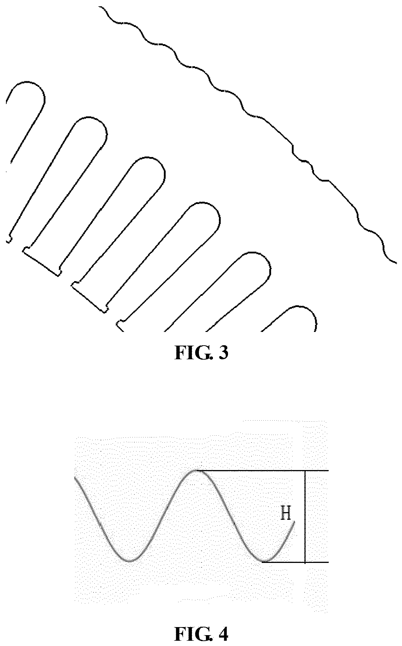

Preferably, the wave-shaped structure is a sine-shaped structure, a continuous rectangular structure, or a sine-rectangular hybrid structure. From the enlarged view shown in FIG. 3, the wave-shaped structure in FIG. 3 is of a hybrid type of sinusoidal wave and rectangular wave. Of course, it may also be any other regular or irregular shape.

Generally, the quantity of sine wave peaks or valleys is more than five, so as to cover the entire area of the outer circumference of the stator punching piece.

In a preferred embodiment, in order not to affect the structural strength of the stator core, and taking into account the demand for the amount of cooling medium, the range of the vertical distance H between the lowest point of the concave and the highest point of the convex is 0.1-5 mm. Of course, the sizes of the concaves and convexes are not limited by the above numerical range, and may be adjusted according to the overall design requirements of the motor. FIG.4 shows a schematic diagram of the vertical distance H between the peak and peak of the sinusoidal stator punching piece. The value of the vertical distance H in FIG. 4 is preferably 3 mm.

In a more preferred embodiment, the range of the vertical distance H between the lowest point of the concave and the highest point of the convex is 2-4 mm. This numerical range is a preferred range for improving the cooling efficiency of the motor, and technical effects better than normal are obtained.

As shown in FIG.2, a number of lugs are provided on the outer circumference of the stator punching piece. The lugs may be used to fix the stator punching piece and the stator core composed of the stator punching pieces on the motor housing. The lugs may be provided or not provided with the concave-convex structure.

In another aspect of the embodiments of the present disclosure, a stator core is provided, which is formed by laminating a number of the above stator punching pieces.

In a preferred embodiment, the concave-convex structures of the stator punching pieces of the same stator core have the same or similar structure, and their concave or convex positions during lamination are the same, so that the concaves on the stator core form a straight flow channel in the axial direction. Alternatively, the concave or convex positions on the stator punching pieces are slightly misaligned, thereby forming a curved or spiral cooling medium flow channel on the stator core.

In yet another aspect of the embodiments of the present disclosure, a motor is further provided, which uses any one of the above stator cores. Therefore, the application of the stator core can increase the rated power and rated torque of the motor by 5-10%, and thus unexpected technical effects are obtained through the above improvement on the structure of the stator punching piece.

Further, in order to ensure or improve the cooling effect, the cooling medium of the motor is oil or a mixture of oil and water, instead of a single form of water cooling.

The above description are only embodiments of the present disclosure, and are not used to limit the protection scope of the present disclosure. Any modification, equivalent replacement, improvement, expansion, etc. made within the spirit and principle of the present disclosure shall all be included in the protection scope of the present disclosure.

## Claims

1. A stator punching piece, formed by die stamping, **characterized in that**: an outer circumference of the stator punching piece is provided with a continuous concave-convex structure extending in an axial direction of the stator punching piece for a cooling medium to flow therethrough, so as to increase an heat dissipation area of an outer circumference of a stator core composed of the stator punching pieces and improve a flow state of the cooling medium on the outer circumferential surface of the stator core, thereby increasing a rated power and rated torque of a motor.

2. The stator punching piece according to claim 1, **characterized in that**: the concave-convex structure is a wave-shaped structure.

3. The stator punching piece according to claim 2, **characterized in that**: the wave-shaped structure is a sine-shaped structure, a continuous rectangular structure, or a sine-rectangular hybrid structure.

4. The stator punching piece according to any one of claims 1-3, **characterized in that**: a vertical distance between a lowest point of the concave and a highest point of the convex is 0.1-5 mm.

5. The stator punching piece according to claim 4, **characterized in that**: a vertical distance between a lowest point of the concave and a highest point of the convex is 2-4 mm.

6. The stator punching piece according to any one of claims 1-3, **characterized in that**: a number of lugs are provided on the outer circumference of the stator punching piece, and the lugs are provided or not provided with the concave-convex structure.

7. A stator core, formed by laminating a number of stator punching pieces according to any one of claims 1-6.

8. The stator core according to claim 7, **characterized in that**: the concave-convex structures of the stator punching pieces have a same structure, and their positions when laminated are same or different.

9. A motor, **characterized in that**: the motor comprises the stator core according to claim 7 or 8, and the stator core can increase a rated power and rated torque of the motor by 5-10%.

10. The motor according to claim 9, **characterized in that**: the cooling medium of the motor is oil or a mixture of oil and water.
